# EUROPEAN PATENT APPLICATION

(11) **EP 4 614 828 A1**
(43) Date of publication of application: **10.09.2025**
(21) Application number: 23886409.4
(22) Date of filing: 06.11.2023
(51) Int. Cl.: H04B 7/06, H04B 7/0408, H04B 7/0417, H04W 72/23, H04W 72/04, G06N 20/00

(54) **METHOD AND DEVICE FOR BEAM INDICATION IN WIRELESS COMMUNICATION SYSTEM**

(30) Priority: 04.11.2022 KR 20220146404
(71) Applicant: LG Electronics Inc., Yeongdeungpo-gu Seoul 07336 (KR)
(72) Inventor: KANG, Jiwon, Seoul 06772 (KR); PARK, Haewook, Seoul 06772 (KR)
(74) Representative: Frenkel, Matthias Alexander
(86) International application number: PCT/KR2023/017664
(87) International publication number: WO 2024/096715

(57) **Abstract**

A method performed by a terminal in a wireless communication system according to an embodiment disclosed in the present disclosure comprises the steps of: receiving configuration information; receiving a beam indication; and receiving physical signals/channels on the basis of the beam indication. The configuration information includes information about a plurality of reference signals (RSs) for the beam indication. A plurality of RS sets are configured on the basis of the plurality of RSs. The beam indication is performed on the basis of one of the plurality of RS sets.

## Description

### [TECHNICAL FIELD]

The present disclosure relates to a method and a device for a beam indication in a wireless communication system.

### [BACKGROUND]

A mobile communication system has been developed to provide a voice service while ensuring the activity of a user. However, the area of the mobile communication system has extended to a data service in addition to a voice. Due to the current explosive increase in traffic, there is a shortage of resources, and thus users demand a higher speed service. Accordingly, there is a need for a more advanced mobile communication system.

Requirements for a next-generation mobile communication system need to be able to support the accommodation of explosive data traffic, a dramatic increase in the data rate per user, the accommodation of a significant increase in the number of connected devices, very low end-to-end latency, and high-energy efficiency. To this end, various technologies, such as dual connectivity, massive multiple input multiple output (MIMO), in-band full duplex, non-orthogonal multiple access (NOMA), super wideband support, and device networking, are researched.

In relation to beam management, Set A and Set B are defined. Specifically, according to BM-Casel, a UE estimates/determines beams of the Set A (e.g., preferred beam(s) among the beams of the Set A) based on measurement for beams of the Set B (e.g., measurement of RSs related to the beams of the Set B).

### [DISCLOSURE]

### [TECHNICAL PROBLEM]

In a beam prediction operation based on an NW-sided AI/ML model, there may be situations where an AI/ML model being applied needs to be changed, (re-)trained, updated, or fallback to legacy operation due to changes in position, movement, or rotation of a UE. If any of the situations listed above occur, a change in a beam set for a beam indication is required. However, in an existing method, changing the beam set for the beam direction is not supported. The following problems may occur. Even if the beam set previously used for the bean indication has changed due to changes in NW-sided AI/model, (re-)training, legacy fallback, etc., the UE can interpret the beam indication based on an existing beam set. That is, a beam(s) indicated by the base station and a beam(s) determined by the UE may be different. Therefore, accuracy of the beam indication and a reliability of a signaling operation based on the indicated beam may be degraded.

An object of the present disclosure proposes a method for solving the above-described problem.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method performed by a user equipment (UE) in a wireless communication system according to an embodiment of the present disclosure comprises receiving configuration information, receiving a beam indication, and receiving a physical signal/channel based on the beam indication.

The configuration information includes information for a plurality of reference signals (RSs) which are for the beam indication. A plurality of RS sets are configured based on the plurality of RSs. The beam indication is performed based on one of the plurality of RS sets.

The plurality of RS sets may include a first RS set and a second RS set.

The beam indication may include an indicator indicating one set of the first RS set and the second RS set. A number of bits related to the beam indication may be determined based on the indicator. The number of bits related to the beam indication may be i) a first number of bits based on a number of RSs which belong to the first RS set or ii) a second number of bits based on a number of RSs which belong to the second RS set.

The first RS set may be comprised of the plurality of RSs, and the second RS set may be comprised of some of the plurality of RSs.

RSs which belong to the second RS set may include RSs for a beam measurement among the plurality of RSs.

RSs which belong to the second RS set may include RSs determined based on a criterion related to an RS index among the plurality of RSs.

The first RS set may be comprised of the plurality of RSs, and the second RS set may be comprised of RSs mapped to the plurality of RSs.

The beam indication may include an indicator with a number of bits based on a number of the plurality of RSs.

Based on the beam indication being related to the first RS set, an RS indicated by the indicator may be determined as an RS related to the physical signal/channel.

Based on the beam indication being related to the second RS set, an RS mapped to the RS indicated by the indicator may be determined as the RS related to the physical signal/channel.

Each RS which belongs to the second RS set may be mapped to two or more RSs among the plurality of RSs.

A quasi co-location (QCL) relationship may be configured between each RS which belongs to the second RS set and two or more RSs among the plurality of RSs.

A user equipment (UE) operating in a wireless communication system according to another embodiment of the present disclosure comprises one or more transceivers, one or more processors, and one or more memories connected to the one or more processors and storing instructions.

The instructions, based on being executed by the one or more processors, configures the one or more processors to perform all steps of any one of the methods performed by the UE.

A device according to another embodiment of the present disclosure comprises one or more memories and one or more processors functionally connected to the one or more memories.

Based on the one or more memories being executed by the one or more processors, the one or more processors store instructions configured to perform all steps of any one of the methods performed by the UE.

One or more non-transitory computer-readable media according to another embodiment of the present disclosure stores instructions. The instructions executable by one or more processors configure the one or more processor perform all steps of any one of the methods performed by the UE.

A method performed by a base station in a wireless communication system according to another embodiment of the present disclosure comprises transmitting configuration information, transmitting a beam indication, and transmitting a physical signal/channel based on the beam indication.

The configuration information includes information for a plurality of reference signals (RSs) which are for the beam indication. A plurality of RS sets are configured based on the plurality of RSs. The beam indication is performed based on one of the plurality of RS sets.

A base station operating in a wireless communication system according to another embodiment of the present disclosure comprises one or more transceivers, one or more processors, and one or more memories connected to the one or more processors and storing instructions.

The instructions, based on being executed by the one or more processors, configures the one or more processors to perform all steps of any one of the methods performed by the base station.

### [ADVANTAGEOUS EFFECTS]

According to an embodiment of the present disclosure, a beam indication includes information for one of a plurality of RS sets. A set related to a beam indicated to a UE can be changed efficiently and quickly, thereby preventing accuracy of the beam indication from deteriorating after a specific time. As a specific example, the specific tine can include i) to iii) below.
i) A time after the NW-sided AI/model is changed or (re-)trained
ii) A time after a beam indication method is changed from an AI/model-based method to an existing method
iii) A time after the beam indication method is changed from the existing method to the AI/model-based method

That is, according to the existing method, the accuracy of the beam indication performed after times i) to iii) above can be reduced. On the other hand, according to an embodiment of the present disclosure, the accuracy of the beam indication is not reduced because the RS set related to beam indication is indicated together. In other words, with respect to a beam indication after a specific operation involving a change in the beam set is performed, it is possible to prevent the beam indication from being interpreted based on the existing beam set.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [BRIEF DESCRIPTION OF THE DRAWINGS]

FIG.1 illustrates an example of beamforming using SSB and CSI-RS.
FIG. 2 is a flowchart showing an example of a DL BM procedure using SSB.
FIG. 3 illustrates a functional framework of an AI/ML model.
FIG. 4 illustrates a signaling procedure according to an embodiment of the present disclosure.
FIG. 5 is a flow chart illustrating a method performed by a user equipment according to an embodiment of the present disclosure.
FIG. 6 is a flow chart illustrating a method performed by a base station according to another embodiment of the present disclosure.
FIG. 7 illustrates configuration of a first device and a second device according to an embodiment of the present disclosure.

### [DETAILED DESCRIPTION]

A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the terminal. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), AR(Augmented Reality) device, VR(Virtual Reality) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, an Unmanned Aerial Vehicle (UAV), AR(Augmented Reality) device, VR(Virtual Reality) device, and the like.

### Beam Management (BM)

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.
- Beam measurement: Opeation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS).

Further, each BM procedure may include Tx beam sweeping for determining the Tx beam and Rx beam sweeping for determining the Rx beam.

### DL BM

The DL BM procedure may include (1) transmission of beamformed DL reference signals (RSs) (e.g., CIS-RS or SS Block (SSB)) of the eNB and (2) beam reporting of the UE.

Here, the beam reporting includes a preferred DL RS identifier (ID)(s) and L1-Reference Signal Received Power (RSRP) corresponding to the preferred DL RS identifier (ID)(s).

The DL RS ID may be an SSB Resource Indicator (SSBRI) or a CSI-RS Resource Indicator (CRI).

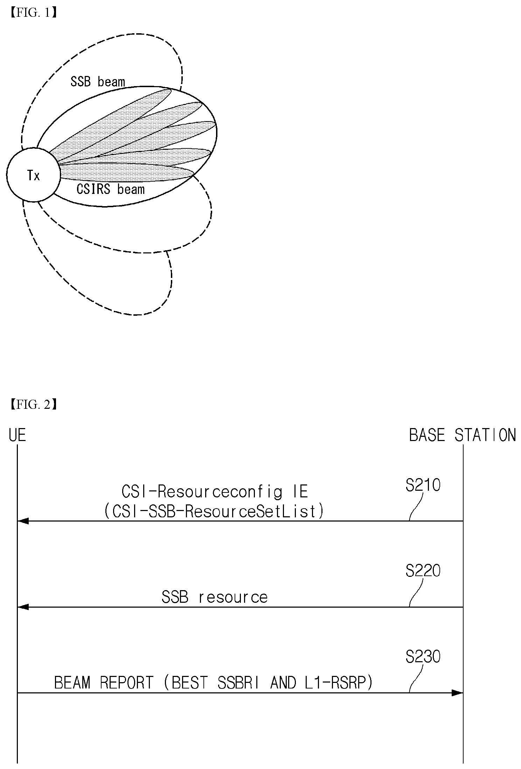

FIG.1 illustrates an example of beamforming using SSB and CSI-RS.

As illustrated in FIG. 1, an SSB beam and a CSI-RS beam may be used for the beam management. A measurement metric is an L1-RSRP for each resource/block. The SSB may be used for coarse beam management and the CSI-RS may be used for fine beam management. The SSB may be used for both the Tx beam sweeping and the Rx beam sweeping.

The Rx beam sweeping using the SSB may be performed while the UE changes the Rx beam for the same SSBRI across multiple SSB bursts. Here, one SS burst includes one or more SSBs and one SS burst set includes one or more SSB bursts.

FIG. 2 is a flowchart showing an example of a DL BM procedure using SSB.

A configuration for beam report using the SSB is performed during a CSI/beam configuration in an RRC connected state (or RRC connected mode).
- The UE receives from the eNB CSI-ResourceConfig IE including CSI-SSB-ResourceSetList including SSB resources used for the BM (S210).

Table 1 shows an example of CSI-ResourceConfig IE. As shown in Table 1, a BM configuration using the SSB is not separately defined and the SSB is configured like the CSI-RS resource.

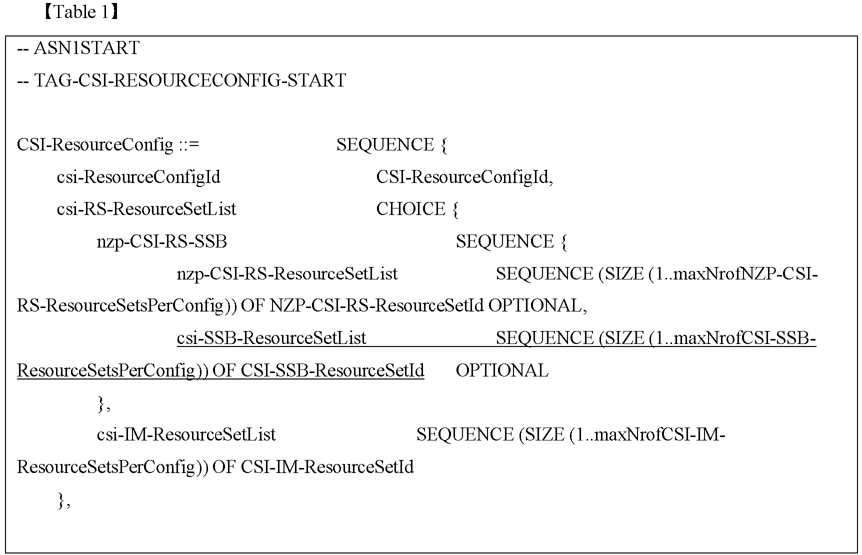

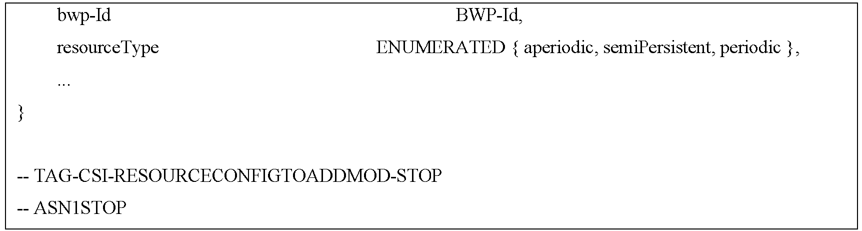

In Table 1, csi-SSB-ResourceSetList parameter represents a list of SSB resources used for beam management and reporting in one resource set. Here, SSB resource set may be configured as {SSBx1, SSBx2, SSBx3, SSBx4, ...}. For example, SSB index may be defined as 0 to 63.
- The UE receives from the eNB the SSB resource based on the CSI-SSB-ResourceSetList (S220).
- When CSI-reportConfig associated with reporting of SSBRI and L1-RSRP is configured, the UE (beam) reports to the eNB best SSBRI and L1-RSRP corresponding thereto (S230).

In other words, when reportQuantity of the CSI-reportConfig IE is configured as 'ssb-Index-RSRP' , the UE reports to the eNB best SSBRI and L1-RSRP corresponding thereto.

In addition, when the CSI-RS resource is configured in the same OFDM symbol(s) as SSB (SS/PBCH Block) and 'QCL-TypeD' is applicable, the UE may assume that the CSI-RS and the SSB are quasi co-located from the viewpoint of 'QCL-TypeD'.

Here, the QCL TypeD may mean that antenna ports are QCL from the viewpoint of a spatial Rx parameter. When the UE receives a plurality of DL antenna ports having a QCL Type D relationship, the same Rx beam may be applied. Further, the UE does not expect that the CSI-RS is configured in an RE overlapped with the RE of the SSB.

### BM enhancements in NR Rel-16

The DL/UL beam indication standardized in 3GPP NR Rel-15 has been designed to separately indicate beams for each DL/UL channel/RS resource to ensure beam indication flexibility, and this indication method has been designed separately for each channel/RS.

This design direction eventually had the problem that a base station had to indicate a beam change for each channel/RS resource to multiple UEs communicating with the base station using a single beam in order to change a serving beam for the multiple UEs, which resulted in large signaling overhead and large beam change latency. Along with the UL beam change, UL power control-related parameters, especially pathloss RS (PL RS), had to be changed for each UL channel/RS, which also resulted in signaling overhead/latency problems. To complement these drawbacks, five features were introduced in Rel-16. Table 2 below shows the five features.

**[Table 2]**

| |
|---|
| 1. Default spatial relation/PL RS |
| Firstly, since many UEs in NR FR2 deployment use a single analog beam at a time and meet the beam correspondence, this enables unifying DL and UL beam indication, meaning that a DL RS resource can be commonly used as a source RS for both DL beam and UL beam indication. It is also possible to unify the source DL RS for DL/UL beam indication with the pathloss reference RS, i.e. the RS used for pathloss estimation at UE for UL power control, because gNodeB would use a same beam direction for both transmission of the DL RS and reception of the UL signal. Based on this motivation, the feature so called 'default spatial relation/pathloss reference RS' was introduced in Rel-16. In this mode of operation, spatial relation RS and pathloss reference RS do not need to be explicitly indicated from gNodeB to UE, and UE uses one source RS for PDCCH/PDSCH beam as for the spatial relation RS and the pathloss reference RS. Therefore, gNodeB only needs to update the DL source RS whenever needed to update the serving Tx/Rx beam for the UE. Above operation can be enabled for dedicated PUCCH, SRS, and/or PUSCH scheduled by DCI format 0_0 by respective RRC enablers. |
| 2. Multi-CC simultaneous TCI/spatial relation update |
| Secondly for multi-carrier operation, it is common that antenna/RF components are shared for same or multiple bands at both gNodeB and UE sides. For example, multi-band antenna is a very common tool for UE implementation to minimize size and cost of the communication modules. This means that a beam can be commonly used for transmission and/or reception across multiple component carriers (CCs) in one or multiple bands. Based on this motivation, BM signaling can be saved via switching beam indication from per CC basis into per CC group basis. Therefore, in Rel-16, it was introduced that the source RS for DL/UL beam indication can be updated simultaneously across multiple CCs. For this operation, one or two CC lists can be configured to UE by higher layer for DL and UL, respectively. Once source RS ID(s) are activated for DL beam indication, the RS(s) with the same RS ID(s) are also activated in other CC(s) in the same CC list. Similarly, once a spatial relation RS is activated for an SRS resource in a CC, the same RS is activated as spatial relation RS for the SRS resource(s) with the same resource ID in other CC(s) in the same CC list. |
| 3. PUCCH resource group based spatial relation update |
| Third, in Rel.15, the spatial relation RS for PUCCH can be activated/deactivated per resource level. Since NR allows up to 128 PUCCH resources per UE, this per-resource based signaling would require a large amount of beam indication signaling for high/mid mobility UE. Due to the fact that one or a few beams are typically used across all PUCCH resources, e.g., one common beam per UE or per UE panel, PUCCH resource group based spatial relation update mechanism was introduced in Rel-16. For a UE, up to four PUCCH resource groups can be configured by RRC per BWP, and one MAC CE can activate/deactivate a common spatial relation RS for all the PUCCH resources in the same resource group. |
| 4. MAC CE based spatial relation indication for aperiodic/semi-persistent SRS |
| Fourth, SRS is an important tool for UL link adaptation and for DL channel estimation using DL-UL channel reciprocity. In Rel.15, spatial relation RS for aperiodic SRS was configured by RRC only, meaning that a large number of SRS resources with different spatial relation RSs need to be configured by RRC to support high mobility UE, for gNodeB to dynamically select and trigger one SRS resource among them according to UE mobility. To alleviate this burden, MAC CE based spatial relation indication for aperiodic/semi-persistent SRS was introduced in Rel-16. Using this MAC CE, spatial relation RSs for a set of SRS resources can be updated together. |
| 5. MAC CE based PL RS update for aperiodic/semi-persistent SRS and PUSCH |
| Fifth, in Rel.15, pathloss reference RSs for UL power control for PUSCH and SRS could only be configured by RRC and the maximum configurable number of pathloss RSs was limited to a small number, which was four. This could lead to frequent RRC reconfiguration considering sharply beamformed RS transmission and high UE mobility in FR2. To address this issue, MAC CE based pathloss reference RS update for aperiodic/semi-persistent SRS and PUSCH was introduced in Rel-16. The maximum configurable number of pathloss reference RSs by RRC was increased to 64, and the new MAC CE can activate up to four pathloss reference RSs among them. Two MAC CEs were introduced for SRS and PUSCH, respectively. |

In Rel-16, enhancements related to beam reporting were made in addition to the beam/PL RS indication-related enhancements described above. In Rel-15, a mode in which a UE measures/reports L1-RSRP for each beam RS is supported. However, in an environment with high inter-beam interference, it is difficult to guarantee that a specific beam RS has good quality as a serving beam just because L1-RSRP, i.e., a reception intensity of the specific beam RS is high. In other words, the UE may select a beam, that has a high reception intensity but has high beam interference, and report the beam to a base station. To overcome this drawback, Rel-16 supports a new beam reporting mode in which the base station configures resources for interference measurement as well as RSs for channel measurement, and the UE measures L1-SINR for the channel resources and the interference resources based on this and reports several RSs with high L1-SINR value.

### BM enhancements in NR Rel-17

As described above, various BM enhancements were made in Rel-16. In particular, the features were created that can significantly reduce the signaling overhead/latency in relation to the beam indication method. However, channel/RS-unified beams are still not configured/indicated to a UE operating with a single serving beam.

Based on this motivation, Rel-17 will standardize a channel/RS unified beam configuration/indication method. In NR, a DL beam is indicated through a transmit configuration indicator (TCI) and thus is referred to as a unified TCI state. An existing TCI state was separately configured/indicated for each DL RS/channel, but the unified TCI state is characterized by unified configuration/indication. Basically, a DL unified TCI state indicates a QCL type-D RS which is unified applied to (some) PDCCHs, PDSCH, and (some) CSI-RS resources, and an UL unified TCI state indicates a spatial relation RS (and PL RS) which is unified applied to (some) PUCCHs, PUSCH, and (some) SRSs. Since the UL spatial relation and PL RS can also be matched with the DL beam RS for a UE, for which beam correspondence is established, in the same manner as Rel-16 default spatial relation/PL RS feature, the channels/RS to which the unified TCI state is applied can encompass both DL channels/RSs and UL channels/RSs. This is referred to as a joint DL/UL TCI state. That is, the following two modes will be supported.
- Joint DL/UL TCI configuration/indication mode: DL RS configured/indicated in a joint TCI state may be applied as not only the QCL type-D RSs for DL channels/RSs but also the spatial relation RSs (and PL RS) for UL channels/RSs. That is, if an update to the joint TCI state is indicated, the beam RSs (or/and PL RS) for the DL channels/RSs and the UL channels/RSs may be changed together.
- Separate DL and UL TCI configuration/indication mode: QCL type-D source RSs for DL channels/RSs are unified and configured/indicated by a DL TCI state, and the spatial relation RSs (and PL RS) for UL channels/RSs are unified and configured/indicated by the UL TCI state. The DL TCI state and the UL TCI state are separately configured/indicated.

The DL/UL/joint TCI state will be indicated/updated via MAC-CE and/or DCI. More specifically, one or more TCI states of multiple TCI states configured by RRC (called a TCI state pool) are activated by MAC-CE. If the multiple TCI states are activated by MAC-CE, one of the multiple TCI states is indicated by DCI.

The DCI indication will be supported via a downlink DCI format (DCI1-1/1-2) in which a TCI field is supported, and will be supported both with PDSCH scheduling and without PDSCH scheduling. In the latter case, since the PDSCH scheduling is omitted (similar to the DCI-based semi-persistent scheduling (SPS) release method), ACK transmission of the UE for the corresponding DCI will be supported.

Enhancements related to beam report will be made in Rel-17. Rel-17 beam report mode will support a mode in which a UE measures/reports an optimal beam RS for each TRP, targeting a multi-TRP environment. To this end, if a beam measurement RS set/group is divided into two subsets/sub-groups, and the base station configures them, the UE will select RS(s) for each subset/sub-group and report them along with a quality value (L1-RSRP, [L1-SINR]) of the corresponding RS.

### AI/ML related Description

With the technological advancement of artificial intelligence/machine learning (AI/ML), node(s) and UE(s) constituting a wireless communication network are becoming more intelligent/advanced.

In particular, due to the intelligence of networks/base stations, it is expected that various network/base station decision parameters can be quickly optimized and derived/applied based on various environmental parameters.

The environmental parameters may include at least one of distribution/location of base stations, distribution/location/material of buildings/furniture, etc., location/movement direction/speed of UEs, or climate information. However, the above-described parameters are only examples, and the environmental parameters may further include other environmental parameters related to the network/base station decision parameters in addition to the listed parameters.

The network/base station decision parameters may include at least one of transmission/reception power of each base station (BS), transmission power of each UE, precoder/beam of BS/UE, time/frequency resource allocation for each UE, or duplex method of each BS. However, the above-described parameters are only examples, and the network/base station decision parameters may further include other parameters determined by the network/base station in addition to the listed parameters.

In line with this trend, many standardization organizations (e.g., 3GPP, O-RAN) are considering introduction of AI/ML, and studies on this are also actively underway.

The AI/ML may be easily referred to as artificial intelligence based on deep learning in a narrow sense, but conceptually, it may be classified as below.
- Artificial Intelligence: it is any automation that allows machines to do the work that people would otherwise do.
- Machine Learning: it refers to a technology in which machines learn patterns for decision-making from data on their own without explicitly programming rules.
- Deep Learning: it is an artificial neural network-based model, and allows machines to perform feature extraction and decision from unstructured data at once. This algorithm depends on a multilayer network consisting of interconnected nodes for feature extraction and transformation, inspired by biological nervous systems, i.e., neural networks. A common deep learning network architecture includes deep neural network (DNN), recurrent neural network (RNN), and convolutional neural network (CNN).

As above, artificial intelligence (AI) is the broadest concept of AI/ML, and deep learning is the narrowest concept of AI/ML. Machine learning (ML) may be interpreted as a narrower concept than artificial intelligence and a broader concept than deep learning.

Types of AI/ML based on various criteria
- Offline vs Online

### Offline Learning

- Offline learning faithfully follows a sequential procedure of database collection, learning, and prediction. That is, the collection and learning may be performed offline, and the completed program may be installed in the field and used for prediction work. In most situations, such offline learning methods are used.

### Online Learning

- Online learning refers to a method of gradually improving performance by incrementally learning with additional data generated, taking advantage of the fact that data that can be used for recent learning is continuously generated via the Internet.

### Classification based on AI/ML Framework concept

- Centralized Learning

In centralized learning, when training data collected from multiple different nodes is reported to a centralized node, all data resources/storage/learning (e.g., supervised learning, unsupervised learning, reinforcement learning, etc.) are performed in one centralized node.
- Federated Learning

Federated learning is constructed based on data in which a collective model exists across individually distributed data owners. Instead of collecting data into the model, AI/ML models are imported into a data source, allowing local nodes/individual devices to collect data and train their own copies of the model, so there is no need to report source data to a centralized node.

In the federated learning, parameters/weight of the AI/ML model is sent again to the centralized node to support general model training. The federated learning has advantages in terms of increase in computation speed and information security. That is, a process of uploading personal data to a central server is unnecessary, and leakage and misuse of personal information can be prevented.
- Distributed Learning

Distributed learning refers to a concept that machine learning processes are scaled and distributed across a cluster of nodes. Training models are shared across multiple nodes split and operating simultaneously to speed up model training.

### Classification according to learning method

### - Supervised Learning

Supervised learning is a machine learning task that aims to learn a mapping function from input to output, given a labeled data set. The input data is called training data and has known labels or results. Examples of the supervised learning are as follows.
1) Regression: Linear Regression, Logistic Regression
2) Instance-based Algorithms: k-Nearest Neighbor (KNN)
3) Decision Tree Algorithms: CART
4) Support Vector Machines: SVM
5) Bayesian Algorithms: Naive Bayes
6) Ensemble Algorithms: Extreme Gradient Boosting, Bagging: Random Forest

Supervised learning may be further grouped into regression and classification problems, where classification is predicting labels and regression is predicting quantities.
- Unsupervised Learning

Unsupervised learning is a machine learning task that aims to learn functions that describe hidden structures in unlabeled data. The input data is not labeled and there are no known results. Some examples of unsupervised learning include K-means clustering, Principal Component Analysis (PCA), nonlinear Independent Component Analysis (ICA), and long short-term memory (LSTM).
- Reinforcement Learning

In reinforcement learning (RL), an agent aims to optimize long-term goals by interacting with the environment based on a trial and error process, and is goal-oriented learning based on interaction with the environment. Examples of RL algorithm are as follows.
1) Q-learning
2) Multi-armed bandit learning
3) Deep Q Network
4) State-Action-Reward-State-Action (SARSA)
5) Temporal Difference Learning
6) Actor-critic reinforcement learning
7) Deep deterministic policy gradient
8) Monte-Carlo tree search

The reinforcement learning can be additionally grouped into model-based reinforcement learning and model-free reinforcement learning.

Model-based reinforcement learning: it refers to an RL algorithm that uses a predictive model, and obtains the transition probabilities between states using various dynamic states of the environment and a model in which these states lead to rewards.

Model-free reinforcement learning: it refers to a RL algorithm based on value or policy that achieves the maximum future reward. Multi-agent environments/states are computationally less complex and do not require an accurate representation of the environment.

RL algorithms can also be classified into value-based RL vs. policy-based RL, policy-based RL vs. non-policy RL, etc.

### Representative Model of Deep Learning

### 1. Feed-Forward Neural Network (FFNN)

FFNN consists of an input layer, a hidden layer, and an output layer.

### 2. Recurrent Neural Network (RNN)

RNN is a type of artificial neural network in which hidden nodes are connected to directed edges to form a directed cycle. It is a model suitable for processing data that sequentially appears, such as voice and text.

### 3. Convolution Neural Network (CNN)

CNN is used for two purposes of reducing model complexity and extracting good features by applying convolution operations generally used in video processing or image processing fields.
- Kernel or filter: it refers to a unit/structure that applies weight to an input of a specific range/unit.
- Stride: it refers to a range of movement of the kernel within the input.
- Feature map: it refers to a result of applying the kernel to the input.
- Padding: it refers to a value added to adjust the size of the feature map.
- Pooling: it refers to an operation to reduce the size of the feature map by downsampling the feature map (e.g., max pooling, average pooling).

### 4. Auto Encoder

An auto encoder refers to a neural network that receives a feature vector x as input and outputs the same or similar vector x' . An input node and an output node of the auto encoder have the same feature.

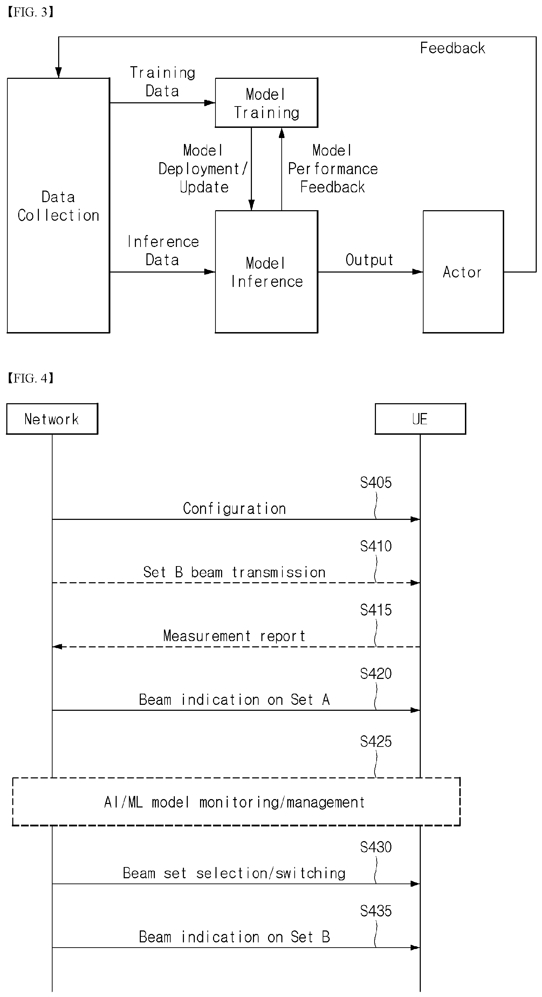

FIG. 3 illustrates a functional framework of an AI/ML model.

In the functional framework illustrated in FIG. 3, the definition of each term and the operation of each function may be based on Table 3 below.

**[Table 3]**

| |
|---|
| Data collection: Data collected from the network nodes, management entity or UE, as a basis for ML model training, data analytics and inference. |
| ML Model: A data driven algorithm by applying machine learning techniques that generates a set of outputs consisting of predicted information, based on a set of inputs |
| ML Training: An online or offline process to train an ML model by learning features and patterns that best present data and get the trained ML model for inference. |
| ML Inference: A process of using a trained ML model to make a prediction or guide the decision based on collected data and ML model. |
| • Data Collection is a function that provides input data to Model training and Model inference functions. AI/ML algorithm specific data preparation (e.g., data pre-processing and cleaning, formatting, and transformation) is not carried out in the Data Collection function. |
| Examples of input data may include measurements from UEs or different network entities, feedback from Actor, output from an AI/ML model. |
| ∘ Training Data: Data needed as input for the AI/ML Model Training function. |
| ∘ Inference Data: Data needed as input for the AI/ML Model Inference function. |
| • Model Training is a function that performs the ML model training, validation, and testing which may generate model performance metrics as part of the model testing procedure. The Model Training function is also responsible for data preparation (e.g. data pre-processing and cleaning, formatting, and transformation) based on Training Data delivered by a Data Collection function, if required. |
| ∘ Model Deployment/Update: Used to initially deploy a trained, validated, and tested AI/ML model to the Model Inference function or to deliver an updated model to the Model Inference function. |
| ▪ Note: Details of the Model Deployment/Update process as well as the use case specific AI/ML models transferred via this process are out of RAN3 Rel-17 study scope. The feasibility to single-vendor or multi-vendor environment has not been studied in RAN3 Rel-17 study. |
| • Model Inference is a function that provides AI/ML model inference output (e.g. predictions or decisions) . Model Inference function may provide model performance feedback to Model Training function when applicable. The Model inference function is also responsible for data preparation (e.g. data pre-processing and cleaning, formatting, and transformation) based on Inference Data delivered by a Data Collection function, if required. |
| ∘ Output: The inference output of the AI/ML model produced by a Model Inference function. |
| ▪ Note: Details of inference output are use case specific. |
| ∘ Model Performance Feedback: It may be used for monitoring the performance of the AI/ML model. |
| ▪ Note: Details of the Model Performance Feedback process are out of RAN3 scope. |
| • Actor is a function that receives the output from the Model inference function and triggers or performs corresponding actions. The Actor may trigger actions directed to other entities or to itself. |
| ∘ Feedback: Information that may be needed to derive training or inference data or performance feedback. |

### Data Set

A data set used in AI/ML is classified into training data, validation data, and test data, and their definition is as follows.
- Training data

Data set for training a model
- Validation data

Data set for verifying a model whose training has been already completed

The validation data is a data set usually used to prevent over-fitting of a training data set.

The validation data is a data set for selecting the best among various models trained during the training process. Therefore, the validation data may be seen as a data set related to training.
- Test data

The test data is a data set for final evaluation. The test data is independent of training.

The data set may use a training set including the above-described data in a predetermined ratio.

For example, a training set including training data and validation data in a ratio of 8:2 or 7:3 may be used.

For example, a training set including training data, validation data, and test data in a ratio of 6:2:2 may be used.

### Collaboration level

A collaboration level can be defined as follows depending on whether the AI/ML function between a base station and a UE is capable.

**[Table 4]**

| |
|---|
| **Cat 0a)** No collaboration framework: AI/ML algorithms purely implementation based and not requiring air-interface changes. -> Baseline |
| **Cat 0b)** No collaboration framework with modified Air-Interface catering to efficient implementation-based AI/ML algorithms. |
| **Cat 1)** Inter-node assistance to improve the respective nodes' AI/ML algorithms. This would apply to UEs getting assistance from gNBs (for training, adaptation, etc.) and vice-versa. This level does not require model exchange between network nodes. |
| **Cat 2)** Joint ML operation between UEs and gNBs. This level requires AI/ML model instruction or exchange between network nodes. |

The collaboration levels shown in Table 4 are examples and may be modified and utilized differently from the illustrated examples based on the implementation method. For example, a collaboration level that combines two or more of the illustrated collaboration levels may be defined/utilized. For example, collaboration level(s) excluding one or more of the illustrated collaboration levels may be utilized.

In the present disclosure, '/' means 'and', 'or', or 'and/or' according to a context. In the present disclosure, 'beam' may mean a source RS for a 'spatial filter' or a 'spatial relation' , and may be interpreted as a QCL (type-D) RS or a TCI state or (in case of uplink) a spatial relation RS.

As an example, in the present disclosure, 'beam' may mean a spatial filter determined based on the reference RS or the source RS. The spatial filter may include a spatial domain filter, a spatial domain transmission filter, and a spatial domain receive filter.

As an example, a beam related to UL may be referred to as i) a spatial filter (for uplink transmission or uplink reception), ii) a spatial domain filter (for uplink transmission or uplink reception), iii) an uplink spatial domain transmission filter, iv) an uplink spatial domain receive filter, v) an uplink transmission spatial filter (UL Tx spatial filter) or vi) an uplink receive spatial filter (UL Rx spatial filter).

As an example, a beam related to DL may be referred to as i) a spatial filter (for downlink transmission or downlink reception), ii) a spatial domain filter (for downlink transmission or downlink reception), iii) a downlink spatial domain transmission filter, iv) a downlink spatial domain receive filter, v) a downlink transmission spatial filter (DL Tx spatial filter) or vi) a downlink receive spatial filter (DL Rx spatial filter).

According to the existing 3GPP NR beam indication method, the beam RS ID (e.g., CRI, SSBRI) is indicated as a source/reference RS to be used for transmission and/or reception of a target RS/channel.

According to the DL beam indication method, the base station designates the QCL source RS to the UE as a specific CSI-RS resource or SSB resource in terms of spatial Rx parameters for the target channel/RS (QCL type-D RS). The UE that receives the indication may receive the target channel/RS with the beam that receives the source RS. At this time, the UE is not forced to receive the target channel/RS with the same UE beam as the beam that receives the source RS. The base station informs the UE of the source RS in order to prevent unnecessary reception beam searches of the UE.

According to the UL beam indication method, the base station designates the QCL source RS to the UE as a specific CSI-RS resource, SSB resource, or SRS resource in terms of the spatial Rx parameters for the target channel/RS (spatial relation RS).

When the source RS is the DL RS (e.g., CSI-RS, SSB), the UE that receives the indication transmits a target UL channel/RS with a Tx beam corresponding to an Rx beam used for receiving the DL RS. When the source RS is the UL RS (e.g., SRS), the UE that receives the indication transmits the target UL channel/RS with a Tx beam corresponding to an Rx beam used for transmitting the UL RS. The DL beam RS (e.g., QCL type-D RS) may be indicated while being included in a DL TCI state, and the UL beam RS (e.g., spatial relation RS) may be indicated while being included in a UL TCI state.

Further, (for a UE in which a (one-to-one) correspondence relationship is established between the Tx and Rx beams), the source RSs for the DL and UL beams may be the same DL RS (e.g., CSI-RS, SSB) resource. A joint DL/UL TCI state may be configured/indicated to comprehensively indicate the DL RS.

For convenience of description, the above TCI/QCL/spatial relation RS indication method is collectively referred to as 'beam indication' below.

3GPP Rel-18 started a study on how to use AI/ML in the air-interface. The study item (SI) covers beam management, CSI, and positioning as the main use cases of AI/ML. The present disclosure covers a beam management method among them.

There may be two use cases performing the improved beam management using AI/ML: 'improvement of beam management performance through spatial beam prediction' and 'improvement of beam management performance through temporal beam prediction.' The present disclosure mainly considers the 'improvement of beam management performance through spatial beam prediction,' but it should be noted that the technique in the present disclosure can be modified and applied to the 'improvement of beam management performance through temporal beam prediction.'

The 'improvement of beam management performance through spatial beam prediction' is a use case that achieves more improved beam management precision with lower RS overhead based on UE location/mobility information, etc. as a measurement result for present/past beam RS. In this instance, AI/ML of a UE and/or a network (NW) may be used in a spatial beam prediction operation. For example, AI/ML may be used to achieve performance comparable to beam selection from a large number of beam RSs based on a result measured from a small number of beam RSs.

The AI/ML based beam prediction may be defined based on inputs and outputs related to an AI/ML model (of the UE and/or NW).

For example, the input may be information related to measurement of beams (e.g., RSs related to beams), and the output may be information on specific beam(s) (e.g., ID(s) of RSs related to specific beam(s)).

For example, the input may be reference signal received power (RSRP) of beams in a first set, and the output may be RSRP of beams in a second set (e.g., RSRP of RSs related to all beams or RSRP of RSs related to Set A of beams). The RSRP of the beams in the first set may include RSRP of RSs related to some of all the beams and/or RSRP related to Set B of beams. The RSRP of the beams in the second set may include RSRP of RSs related to all the beams and/or RSRP of RSs related to the Set A of beams.

Table 5 below summarizes the discussions and discussion results related to beam performance improvement.

**[Table 5]**

| |
|---|
| **Conclusion (109e):** |
| For the sub use case BM-Casel, consider the following alternatives for further study: |
| • Alt.1: Set B is a subset of Set A |
| o FFS: the number of beams in Set A and B |
| o FFS: how to determine Set B out of the beams in Set A (e.g., fixed pattern, random pattern, ...) |
| • Alt.2: Set A and Set B are different (e.g. Set A consists of narrow beams and Set B consists of wide beams) |
| o FFS: the number of beams in Set A and B |
| o FFS: QCL relation between beams in Set A and beams in Set B |
| o FFS: construction of Set B (e.g., regular pre-defined codebook, codebook other than regular pre-defined one) |
| • Note1: Set A is for DL beam prediction and Set B is for DL beam measurement. |
| • Note2: The narrow and wide beam terminology is for SI discussion only and have no specification impact |
| • Note3: The codebook constructions of Set A and Set B can be clarified by the companies. |
| **Conclusion (109e)** |
| Regarding the sub use case BM-Casel, further study the following alternatives for AI/ML input: |
| • Alt.1: Only L1-RSRP measurement based on Set B |
| • Alt.2: L1-RSRP measurement based on Set B and assistance information |
| • FFS: Assistance information. The following were mentioned by companions in the discussion: Tx and/or Rx beam shape information (e.g., Tx and/or Rx beam pattern, Tx and/or Rx beam boresight direction (azimuth and elevation), 3dB beamwidth, etc.), expected Tx and/or Rx beam for the prediction (e.g., expected Tx and/or Rx angle, Tx and/or Rx beam ID for the prediction), UE position information, UE direction information, Tx beam usage information, UE orientation information, etc. |
| • Note: The provision of assistance information may be infeasible due to the concern of disclosing proprietary information to the other side. |
| • Alt.3: CIR based on Set B |
| • Alt.4: L1-RSRP measurement based on Set B and the corresponding DL Tx and/or Rx beam ID |
| • Note1: It is up to companies to provide other alternative(s) including the combination of some alternatives |
| • Note2: All the inputs are "nominal" and only for discussion purpose. |

In the results, BM-Case1 refers to 'case of performing estimation/prediction of beams of Set A based on a measurement result of beams included in Set B.' The Set A and the Set B are different.

The Set A and the Set B related to embodiments of the present disclosure described below may be defined based on Table 5 above. The Set B may be a set including beams related to RSs transmitted by the base station (RSs received by the UE). The Set A may be a set of beams used to estimate/determine beams based on a measurement result of RSs related to the Set B. The Set A may be a set of beams used to indicate a specific beam.

The purpose of the BM-Case1 is to select/estimate/predict a beam more precisely than selecting a beam based on the existing method. Specifically, according to the BM-Casel, a beam is selected/estimated/predicted based on the Set A, which is more precise than the Set B (e.g., in selection the Set A that includes a larger number of beams than the Set B and has a shape of a beam with a narrower width than the beam of the Set B).

The present disclosure proposes an environment in which the base station performs the beam indication for Set A based on beam measurement and UE reporting results based on Set B based on a network (NW)-sided ALI/ML model. Here, 'beam indication for Set A' means beam indication for a higher beam granularity (e.g., more beams, a larger maximum/minimum beam angle difference, a smaller inter-beam angle difference, etc.) and may be applied even when Set A is not explicitly defined/set.

As an example, in the present disclosure, 'Set A' and 'Set B' are terms used to refer to beam sets defined/configured for measurement/reporting of the UE, and thus, beam set(s) defined/configured for beam indication of the base station may be referred to differently. In other words, the beam set(s) for the beam indication of the base station may be configured separately from the beam sets for the measurement/reporting of the UE. In an embodiment to be described below, the terms 'Set A' or 'Set B' are used in relation to the beam indication, but the terms may mean that the beam indicated by the base station have the same characteristics as 'Set A' or 'Set B' .

In a beam prediction operation based on an NW-sided AI/ML model, there may be situations where an AI/ML model being applied needs to be changed, (re-)trained, or updated due to changes in position, movement, or rotation of a UE. Whether to perform such an operation may be determined based on i) UE reporting, ii) monitoring/measurement related to the beam/channel quality of the base station, iii) monitoring/measurement of the suitability of the AI/ML model applied environment, iv) validation procedure of the AI/ML model (e.g. comparison with ground-truth values), v) amount/degree of change in the distribution of model input/output data, etc. The reporting of the UE may include at least one of a model change/update request, a beam quality value report, and/or a report on an event in which the beam quality value falls to a predetermined threshold or less.

Table 6 below shows items agreed upon at a RAN1#110bis conference. The agreed items include contents related to the AI/ML model monitoring and life cycle management (LCM).

**[Table 6]**

| |
|---|
| **<LCM: model registration>** |
| Agreement |
| Study LCM procedure on the basis that an AI/ML model has a model ID with associated information and/or model |
| functionality at least for some AI/ML operations |
| FFS: Detailed discussion of model ID with associated information and/or model functionality. |
| FFS: usage of model ID with associated information and/or model functionality based LCM procedure |
| FFS: whether support of model ID |
| FFS: the detailed applicable AI/ML operations |
| **<LCM: model management >** |
| Agreement |
| For model selection, activation, deactivation, switching, and fallback at least for UE sided models and two-sided study the following mechanisms: models, |
| - Decision by the network |
| ∘ Network-initiated |
| ∘ UE-initiated, requested to the network |
| - Decision by the UE |
| ∘ Event-triggered as configured by the network, UE' s decision is reported to network |
| ∘ UE-autonomous, UE' s decision is reported to the network |
| ∘ UE-autonomous, UE' s decision is not reported to the network |
| FFS: for network sided models |
| FFS: other mechanisms |
| Agreement |
| Study potential specification impact needed to enable the development of a set of specific models, e.g., scenario-/configuration-specific and site-specific models, as compared to unified models. |
| Note: User data privacy needs to be preserved. The provision of assistance information may need to consider of disclosing proprietary information to the other side. feasibility |
| Agreement |
| Study the specification impact to support multiple AI models for the same functionality, at least including the aspects: following |
| - Procedure and assistance signaling for the AI model switching and/or selection FFS: Model selection refers to the selection of an AI/ML model among models for the same functionality. (Exact terminology to be discussed/defined) |
| Agreement |
| Study various approaches for achieving good performance across different scenarios/configurations/sites, including |
| i.Model generalization, i.e., using one model that is generalizable to different scenarios/configurations/sites |
| i.Model switching, i.e., switching among a group of models where each model is for a particular scenario/configuration/site |
| • [Models in a group of models may have varying model structures, share a common model structure, or partially share a common sub-structure. Models in a group of models may have different input/output format and/or different pre-/post-processing.] |
| i.Model update, i.e., using one model whose parameters are flexibly updated as the scenario/configuration/site that the device experiences changes over time. Fine-tuning is one example. |
| **<LCM: model monitoring >** |
| Agreement |
| Study AI/ML model monitoring for at least the following purposes: model activation, deactivation, selection, switching, fallback, and update (including re-training). |
| FFS: Model selection refers to the selection of an AI/ML model among models for the same functionality. |
| (Exact terminology to be discussed/defined) |
| Agreement |
| Study performance monitoring approaches, considering the following model monitoring KPIs as general guidance |
| v.Accuracy and relevance (i.e., how well does the given monitoring metric/methods reflect the model and system performance) |
| v.Overhead (e.g., signaling overhead associated with model monitoring) |
| i.Complexity (e.g., computation and memory cost for model monitoring) |
| i.Latency (i.e., timeliness of monitoring result, from model failure to action, given the purpose of model monitoring) |
| i.FFS: Power consumption |
| x.Other KPIs are not precluded. |
| Note: Relevant KPIs may vary across different model monitoring approaches. |
| FFS: Discussion of KPIs for other LCM procedures |
| Agreement |
| Study at least the following metrics/methods for AI/ML model monitoring in lifecycle management per use case: |
| - Monitoring based on inference accuracy, including metrics related to intermediate KPIs |
| i.Monitoring based on system performance, including metrics related to system peformance KPIs |
| .Other monitoring solutions, at least following 2 options. |
| • Monitoring based on data distribution |
| a) Input-based: e.g., Monitoring the validity of the AI/ML input, e.g., out-of-distribution detection, drift detection of input data, or SNR, delay spread, etc. |
| b) Output-based: e.g., drift detection of output data |
| • Monitoring based on applicable condition Note: Model monitoring metric calculation may be done at NW or UE |

As described above, if the application of the AI/ML model must be temporarily suspended for model update, fallback operation, etc., the base station must perform a non-AI/ML-based beam indication. That is, the beam must be indicated based on Set B. Hereinafter, embodiments of the beam indication performed in such a case will be specifically examined.

### Method 1

The base station configures/indicates to the UE whether the candidate beam set to perform the beam indication is Set B or Set A.

The configuration/indication of the candidate beam set to perform the beam indication may be performed based on an RRC message, MAC-CE, and/or DCI.

As an example, a message (e.g., TCI/SRI field in DCI, TCI activation MAC-CE, PUCCH spatial relation MAC-CE) indicating the beam may include the information (as 1-bit information).

As an example, a candidate beam set change message (e.g. via MAC-CE) may be defined and configured/indicated separately from the beam indication message.

As an example, the configuration/indication may be a response message to a specific report/request from the UE. For example, the UE may monitor a quality of a beam that the base station indicates based on an AI/ML prediction, and report to the base station that an event occurs in which the beam quality falls to a specific value or less. Based on the base station's response message to the event occurrence report, it may be stipulated that the candidate beam set is changed from Set A to Set B.

According to an embodiment, it may be assumed that Set B is a subset of Set A. Set B may also be expressed as a reduced beam RS set. Whether to apply the reduced beam RS set may be configured/indicated.

For example, 64 CSI-RS resources (based on RRC signaling) may be configured to form a first set (e.g., Set A). The 64 CSI-RS resources may be CSI-RS resources for a beam management (BM).

The base station (or network) may configure/indicate, to the UE, whether to perform a 6-bit beam indication based on i) a first set (e.g., Set A) consisting of the 64 CSI-RS resources, or ii) whether to perform a 4-bit beam indication based on a second set (e.g., Set B) consisting of some CSI-RS resources (e.g., 16 CSI-RS resources) among the 64 CSI-RS resources. Information related to the determination of a number of sets/bits (e.g., 6 bit indication or 4 bit indication) related to the beam indication may be included in the configuration/indication.

Some of the CSI-RS resources (e.g., a configuration for Set B) may be determined/configured based on at least one of (1) to (3) below.
(1) A rule may be defined so that some of the CSI-RS resources are determined/configured as CSI-RS resources for the UE to perform the beam measurement/report.
(2) Some of the CSI-RS resources may be extracted from Set A beams (i.e., 64 CSI-RS resources) through a specific (configured) rule.

As an example, some of the CSI-RS resources may be comprised of CSI-RS resources having an index corresponding to modulo-N among 64 CSI-RS resources. Specifically, assuming modulo-16, 16 CSI-RS resources with indices from 0 to 15 may be determined as some of the CSI-RS resources (Set B).

As an example, some of the CSI-RS resources may be comprised of CSI-RS resources having an index acquired by adding a specific offset value to the indices corresponding to modulo-N among 64 CSI-RS resources. Specifically, assuming modulo-16, and a specific offset value of 10, 16 CSI-RS resources with indices of 10 to 25 may be determined as some of the CSI-RS resources (Set B).

As an example, the N value and/or the offset value may be configured to the UE by the base station. As an example, the N value and/or the offset value may be stipulated in advance between the UE and the base station as specific values.

(3) The base station may designate, to the UE, (via a bitmap, etc.) resources to be included in Set B among the resources of Set A (64 CSI-RS resources).

According to an embodiment, it may be assumed that Set B and Set A are comprised of different RSs. For example, Set A may consist of CSI-RS resources and Set B may consist of SSB resources. The base station may configure/indicate, to the UE, selection/switching information of the candidate beam RS set.

For example, 64 CSI-RS resources (based on RRC signaling) may be configured as the first set (e.g., Set A), and 16 SSBs (or SSB resources) may be configured as the second set (e.g., Set B).

The base station (or network) may configure/indicate, to the UE, i) whether to perform the 6-bit beam indication based on the first set or ii) whether to perform the 4-bit beam indication based on the second set. Information related to the determination of a number of sets/bits (e.g., 6 bit indication or 4 bit indication) related to the beam indication may be included in the configuration/indication.

The configuration for the second set may be determined based on at least one of (1) and (2) below.
(1) A rule may be defined so that the second set is comprised of resources for the UE to perform the beam measurement/report.
(2) The base station may configure/indicate, to the UE, the second set (Set B) (separately from Set A).

Method 1 may be utilized for AI/ML model re-training and fallback operations by (instantaneously) changing the candidate beam set.

Unlike Method 1, a method may be considered in which the candidate beam set is maintained as Set A, but Set B beam indication is performed using a relationship between Set A and Set B. This is specifically described in Method 2 below.

### Method 2

The base station may configure/indicate, to the UE, whether the beam indication is for Set B or Set A. A UE that receives beam the configuration/indication for Set B may interpret the beam indication of the base station based on correlation information between Set A and Set B beams.

According to Method 2, the beam indication of the base station may be interpreted by the UE as follows.

For example, it can be assumed that 64 CSI-RS resources are configured as Set A and the UE receives the beam indication based on a 6-bit indicator from the base station.
[1] The base station may configure/indicate, to the UE that the corresponding beam indication (6 bit indicator) is for Set A. The UE may interpret the 6-bit indicator as indicating one of the 64 beams (one of the 64 CSI-RS resources).
[2] The base station may configure/indicate, to the UE that the corresponding beam indication (6 bit indicator) is for Set B. The UE may not interpret that the 6-bit indicator indicates one of the 64 beams. That is, the UE may interpret that the 6-bit indicator indicates one of the 16 beams that have a mapping relationship to the 64 beams. As an example, 16 CSI-RS resources that have a mapping relationship with 64 CSI-RS resources may be defined/configured. As an example, 16 SSBs that have the mapping relationship with 64 CSI-RS resources may be defined/configured. As an example, 16 CSI-RS resource(s) and SSB(s) that have the mapping relationship with 64 CSI-RS resources may be defined/configured.

Information for configuring/indicating whether the beam indication is for 'Set B or Set A' may be configured/indicated to the UE based on an RRC message, MAC-CE, and/or DCI.

As an example, a message (e.g., TCI/SRI field in DCI, TCI activation MAC-CE, PUCCH spatial relation MAC-CE) indicating the beam may include the information (as 1-bit information).

As an example, a candidate beam set change message (e.g. via MAC-CE) may be defined and configured/indicated separately from the beam indication message.

As an example, the configuration/indication may be a response message to a specific report/request from the UE. For example, the UE may monitor a quality of a beam that the base station indicates based on an AI/ML prediction, and report to the base station that an event occurs in which the beam quality falls to a specific value or less. Based on the base station's response message to the event occurrence report, it may be stipulated that the candidate beam set is changed from Set A to Set B.

According to an embodiment, it may be assumed that Set B is a subset of Set A. In this case, information for a many-to-one correspondence relationship between the beams of Set A and the beams of Set B may be configured/indicated/stipulated.

As an example, a rule may be configured/indicated/stipulated that 1 set B beam RS is mapped to N set A beam RSs in a beam RS index order. When this relationship is defined/configured and the base station configures the beam indication based on Set B (for fallback, model update, etc.), the UE interprets the beam indication of the base station as a beam indication for set B by the mapping information.

According to an embodiment, it may be assumed that Set B and Set A are comprised of different RSs. For example, Set A may consist of CSI-RS resources and Set B may consist of SSB resources. At this time, a mapping relationship between the Set A beams and the Set B beams may be configured.

As an example, an implicit mapping relationship may be configured based on QCL relationship information (e.g., QCL type-D). As a specific example, when Set B consists of SSB resources and Set A consists of CSI-RS resources, a mapping relationship (association relationship) between the Set A beams and the Set B beams may be implicitly configured through SSB resources that have a QCL relationship to the CSI-RS resources. In other words, SSB resources mapped to CSI-RS resources may be SSB resources that have the QCL relationship with the corresponding CSI-RS resources.

When the base station provides the beam configuration/indication for Set B to the UE and indicates a specific CSI-RS resource through the beam indication, the UE may interpret the beam indication as follows. Specifically, the UE may interpret the beam indication as a beam indication for an SSB resource that has the QCL relationship with the specific CSI-RS resource.

In applying the above-described methods, the beam set to which the proposed method is applied during the fallback or model update operation may be different from Set B defined in the existing 3GPP RAN1 agreement.

In the existing agreement, the measurement beam set for estimating the beam based on Set A (e.g., used as an input into the AI/ML model, UE beam report for NW-sided model, beam measurement for UE-sided model) is defined as Set B as described above. A distinction between 'Set A' and 'Set B' used in the above-described methods is not intended to limit beam sets to which the embodiments defined in the present disclosure may be applied to those beam sets based on the Set A/Set B definitions.

In other words, a (separate) RS set different from the corresponding beam RS set (the measurement beam set) may be defined/configured as a beam set for the proposed operation.

In addition, although the proposed methods assume a selection/change operation between two beam RS sets (Set A and Set B), the selection/change operation may be extended to a selection/change operation for three or more beam RS sets. In addition to two beam RS sets, Set C may be defined/configured.

As an example, the base station may configure/indicate, to the UE, one set to be used for/applied to the beam indication among Set A, Set B, and Set C.

As an example, it may be stipulated which set to fall back to (or which set to apply) between Set B and Set C depending on a specific condition/case.

As an example, i) a beam RS set to be used while the model is being re-trained/updated and ii) a beam RS set to be used when the model is turned off and the beam indication method falls back to legacy operation may be defined/configured separately. The beam RS set of i) above may be a beam RS set temporarily applied/used until a timer is completed when a specific timer is running. The beam RS set of ii) above may be a beam RS set that is continuously applied/used until there is a separate indication/configuration from the base station.

In the embodiments described above, it is assumed and described that a Set A based beam indication is an indicator for RSs included in Set A. However, this is only an example of the Set A based beam indication, and the Set A beam indication may also be replaced with other forms of information other than an indication indicating a specific RS.

As an example, the beam of Set A may be expressed based on a linear combination of RSs belonging to Set B. The Set A based beam indication may include a plurality of RSs and synthesis combining coefficients related to the plurality of RSs.

As an example, the beam of Set A may be expressed with 2D/3D coordinate values. The Set A based beam indication may include information for a coordinate(s) related to the beam of Set A.

Although the proposed technologies of the present disclosure are described based on NW AI/ML, this does not mean that the technologies of the present disclosure may be applied only in an AI/ML implementation environment of the NW, but the proposed technologies may also be applied in a UE AI/ML implementation environment or a non-AI/ML implementation environment. Further, another UE is applied instead of the base station/NW, and may also be applied to sidelink communication. Further, it is mainly assumed that the NW AI/ML performs training/inference based on a beam report of the UE, but this is not a limitation, and it is also possible to perform training/inference for the NW AI/ML model through uplink transmission of the UE and/or another UE report information (e.g., a CSI report, an RRM report, etc.).

The 'beam indication' in the present disclosure may include an indication for a PL RS in the case of a UL beam. That is, an operation of changing/configuring/indicating the candidate beam set to Set A and Set B may be linked to an operation of changing/configuring/indicating the candidate RS set for PL RS (e.g., a PL RS set for Set A and a PL RS set for Set B are configured separately).

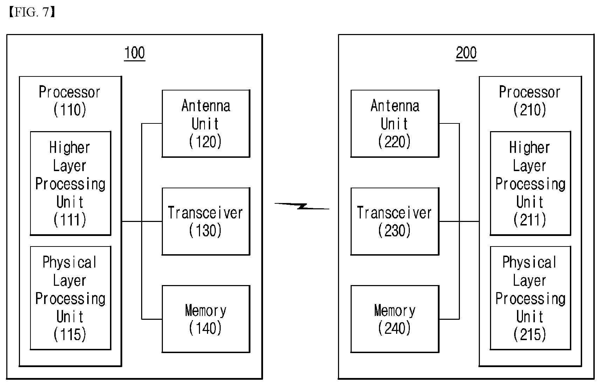

In terms of implementation, the operations (e.g., operations based on at least one of Methods 1 to 2) of the base station/UE according to the above-described embodiments may be processed by devices (e.g., processors 110 and 210 in FIG. 7) in FIG. 7 to be described below.

Further, the operations (e.g., operations based on at least one of Methods 1 to 2) of the base station/UE according to the above-described embodiment may be stored in memories (e.g., 140 and 240 in FIG. 7) in the form of an instruction/program (e.g., instruction or executable code) for driving at least one processor (e.g., 110 and 210 in FIG. 7).

Hereinafter, the signaling procedure based on the above-described embodiments will be specifically described with reference to FIG. 4.

FIG. 4 illustrates a signaling procedure according to an embodiment of the present disclosure.

FIG. 4 illustrates an example of a signaling between a user equipment (UE) and a network (NW) based on the above-described proposed methods (e.g., Method 1 and Method 2). Here, the UE/NW is just an example, and may be replaced and applied with various devices such as the device in FIG. 7. FIG. 4 is just for convenience of description and does not limit the scope of the present disclosure. Further, some step(s) illustrated in FIG. 4 may be omitted according to a situation and/or a configuration. The base station belonging to the NW in FIG. 4 may correspond to any entity such as base station (BS), node B, TRP, etc.

The UE may receive a Set B (and Set A) related configuration from the NW (S405). The configuration may include configuration information related to TCI states, ID information for UE beams, a transmission cycle and time/frequency location information, sequence information, and/or information on a relevancy between RSs (e.g., whether there is QCL).

After the beam related configuration (S405), the base station may transmit RSs belonging to Set B (and Set A) to the UE, and the UE may perform measurement therefor (S410).

The UE that performs the measurement for the beam related configuration (S405) information and the Set B beams may perform reporting of a corresponding measurement value(s) (S415).

Based on the report information of the UE and/or another uplink signal/information, the NW (AI/ML) may perform beam prediction/selection, and perform a beam indication for a target channel/RS in Set A (S420).

The NW or UE may perform monitoring of the AI/ML model and/or related beam/channel quality (S425), and based on this, may perform an indication to change/select the beam set to Set B by applying the techniques of the present disclosure (S430). Based on this, beam indication may be performed in Set B (S435).

In applying the operation, processes S430 and S435 may also occur simultaneously.

The operation is exemplified assuming that the Set A based beam indication is given priority over the Set B based beam indication, but conversely, the Set B based beam indication may be given priority and then the Set A based beam indication may also be applied at a time when it is determined that application of the AI/ML model is appropriate.

As mentioned above, the above-described NW/UE signaling and operation may be implemented by the devices 100 and 200 in FIG. 7. For example, the NW may correspond to a first device 100 and the UE may correspond to a second device 200, and in some cases, an opposite case thereto may also be considered.

For example, the above-described NW/UE signaling and operation may be processed by at least one processor 110 or 210 of FIG. 7, and the above-described NW/UE signaling and operation may be stored in a memory (140 or 240 in FIG. 7) in the form of a command/program (e.g. instruction, executable code) for driving at least one processor (110 or 210 in FIG. 7).

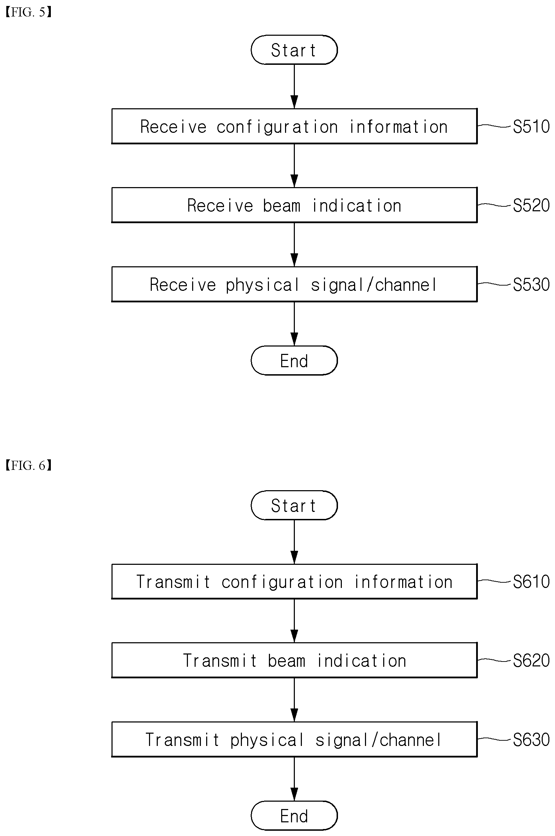

Hereinafter, the above-described embodiments will be described in detail with reference to FIGS. 5 and 6 in terms of the operations of the UE and the base station. Methods to be described below are just distinguished for convenience of description and it is needless to say that some components of any one method may be substituted with some components of another method or may be applied in combination with each other.

FIG. 5 is a flowchart for describing a method performed by the UE in the wireless communication system according to an embodiment of the present disclosure.

Referring to FIG. 5, the method performed by the UE in the wireless communication system according to an embodiment of the present disclosure includes a configuration information receiving step S510, a beam indication receiving step S520, and a physical signal/channel receiving step S530.

In S510, the UE receives configuration information from the base station. The configuration information may be received through a higher layer signaling (e.g., RRC signaling).

The configuration information may include information for a plurality of reference signals (RSs) which are for the beam indication. A plurality of RS sets may be configured based on the plurality of RSs. The plurality of RS sets may be configured based on Method 1 and/or Method 2. As an example, the plurality of RS sets may include a first RS set and a second RS set.

In S520, the UE receives the beam indication from the base station.

As an example, the beam indication may be based on downlink control information (DCI) or medium access control (MAC) control element (CE). As an example, the beam indication may be based on DCI scheduling a physical signal/channel (e.g., PDSCH).

According to an embodiment, the beam indication may be performed based on one of the plurality of RS sets. The beam indication may be based on Method 1 or Method 2. Hereinafter, this will be specifically described.

As an example, the beam indication may be an indicator composed of a number of bits (6 bits) representing one of all RSs (e.g., 64 RSs) or an indicator composed of a number of bits (4 bits) representing one of some RSs (e.g., 16 RSs). At this time, the beam indication may further include a number of bits related indicator. Specifically, the beam indication may include an indicator representing one of the first RS set and the second RS set. A number of bits related to the beam indication may be determined based on the indicator. The embodiment may be based on Method 1.

The number of bits related to the beam indication may be i) a first number of bits (e.g., 6) based on a number of RSs which belong to the first RS set or ii) a second number of bits (e.g., 4) based on a number of RSs which belong to the second RS set.

The first RS set may be composed of the plurality of RSs. The second RS set may be composed of some of the plurality of RSs. The second RS set may be configured/determined based on at least one of (1) to (3) of Method 1.

As an example, the RSs which belong to the second RS set include RSs for the beam measurement among the plurality of RSs (e.g., (1) of Method 1).

As an example, the RSs which belong to the second RS set may include RSs determined based on a criterion related to an RS index among the plurality of RSs (e.g., (2) of Method 1). RSs based on specific RS indices may be determined based on the criterion related to the RS index. The specific RS indices may be determined based on the above-described modulo-N and/or offset.

According to an embodiment, the first RS set may be composed of the plurality of RSs. The second RS set may be composed of RSs mapped to the plurality of RSs. The embodiment may be based on Method 2.

The beam indication may include an indicator (e.g., 6-bit indicator) with a number of bits based on the number of the plurality of RSs. An interpretation method the indicator may vary depending on the RS set related to the beam indication. Hereinafter, this will be specifically described.

Based on the beam indication being related to the first RS set, an RS indicated by the indicator may be determined as an RS related to the physical signal/channel.

Based on the beam indication being related to the second RS set, an RS mapped to the RS indicated by the indicator may be determined as the RS related to the physical signal/channel.

As an example, the beam indication may be implicitly related to the first RS set or the second RS set. As a specific example, when the beam indication is based on a response to an event occurrence report related to the first RS set (or the second RS set), the beam indication may be stipulated as being related to the second RS set (or the first RS set).

As an example, the beam indication may further include an indicator representing one set of the first RS set and the second RS set.

RSs which belong to the second RS set have a mapping relationship (N-to-1 mapping and/or QCL) with the RSs which belong to the first RS set.

As an example, each RS which belongs to the second RS set may be mapped to two or more RSs among the plurality of RSs. As a specific example, the first RS set may be composed of 64 RSs, and the second RS set may be composed of 16 RSs which have a mapping relationship with the 64 RSs. In this case, each RS belonging to the second RS set may be mapped to four RSs belonging to the first RS set.

As an example, a quasi co-location (QCL) relationship is configured between each RS which belongs to the second RS set and two or more RSs among the plurality of RSs. As a specific example, the first RS set may be composed of 64 RSs, and the second RS set may be composed of 16 RSs which have a QCL relationship with the 64 RSs. In this case, THE QCL relationship may be configured between each RS belonging to the second RS set and four RSs belonging to the first RS set.

In S530, the UE receives a physical signal/channel from the base station based on the beam indication.

The physical signal/channel may be a physical downlink control channel (PDCCH), a physical downlink shared channel (PDSCH), or a channel state information-reference signal (CSI-RS).

A beam (e.g., a spatial domain receive filter) related to the physical signal/channel may be determined based on the beam indication. For example, based on the beam indication, an RS belonging to one of the plurality of RS sets may be determined as the RS related to the physical signal/channel.

The operations based on S510 to S530 described above may be implemented by a device in FIG. 7. For example, a UE 200 may control one or more transceivers 230 and/or one or more memories 240 to perform the operations based on S510 to S530.

Hereinafter, the embodiments described above will be specifically described in terms of the operation of the base station.

S610 to S630 described below correspond to S510 to S530 described in FIG. 5. By considering the correspondence relationship, redundant descriptions are omitted. That is, a specific description of the base station operation described below may be replaced with the description/embodiment of FIG. 5 corresponding to the corresponding operation. As an example, the description/embodiments of S510 and S530 in FIG. 5 may be additionally applied to base station operations of S610 to S630 described below.

FIG. 6 is a flowchart for describing a method performed by a base station according to another embodiment of the present disclosure.

Referring to FIG. 6, the method performed by the base station in the wireless communication system according to another embodiment of the present disclosure includes a configuration information transmitting step S610, a beam indication transmitting step S620, and a physical signal/channel transmitting step S630.

In S610, the base station transmits configuration information to the UE.

In S620, the base station transmits a beam indication to the UE.

In S630, the base station transmits a physical signal/channel to the UE based on the beam indication.

The operations based on S610 to S630 described above may be implemented by the device in FIG. 7. For example, the base station 100 may control one or more transceivers 130 and/or one or more memories 140 to perform the operations based on S610 to S630.

A device to which an embodiment of the present disclosure is applicable (a device implementing the method/operation according to an embodiment of the present disclosure) is described below with reference to FIG. 7.

FIG. 7 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE) in a wireless communication system, the method comprising:
receiving configuration information,
wherein the configuration information includes information for a plurality of reference signals (RSs) which are for a beam indication, and a plurality of RS sets are configured based on the plurality of RSs;
receiving the beam indication; and
receiving a physical signal/channel based on the beam indication,
wherein the beam indication is performed based on one of the plurality of RS sets.

2. The method of claim 1, wherein the plurality of RS sets include a first RS set and a second RS set.

3. The method of claim 2, wherein the beam indication includes an indicator indicating one set of the first RS set and the second RS set,
wherein a number of bits related to the beam indication is determined based on the indicator, and
wherein the number of bits related to the beam indication is i) a first number of bits based on a number of RSs which belong to the first RS set or ii) a second number of bits based on a number of RSs which belong to the second RS set.

4. The method of claim 2, wherein the first RS set is comprised of the plurality of RSs and the second RS set is comprised of some of the plurality of RSs.

5. The method of claim 4, wherein RSs which belong to the second RS set include RSs for a beam measurement among the plurality of RSs.

6. The method of claim 4, wherein RSs which belong to the second RS set include RSs determined based on a criterion related to an RS index among the plurality of RSs.

7. The method of claim 2, wherein the first RS set is comprised of the plurality of RSs and the second RS set is comprised of RSs mapped to the plurality of RSs.

8. The method of claim 7, wherein the beam indication includes an indicator with a number of bits based on a number of the plurality of RSs,
wherein based on the beam indication being related to the first RS set, an RS indicated by the indicator is determined as an RS related to the physical signal/channel, and
wherein based on the beam indication being related to the second RS set, an RS mapped to the RS indicated by the indicator is determined as the RS related to the physical signal/channel.

9. The method of claim 7, wherein each RS which belongs to the second RS set is mapped to two or more RSs among the plurality of RSs.

10. The method of claim 7, wherein a quasi co-location (QCL) relationship is configured between each RS which belongs to the second RS set and two or more RSs among the plurality of RSs.

11. A user equipment (UE) operating in a wireless communication system, the UE comprising:
one or more transceivers,
one or more processors; and
one or more memories connected to the one or more processors and storing instructions,
wherein based on the instructions being executed by the one or more processors, the one or more processors are configured to perform all steps of a method of any one of claims 1 to 10.

12. A device comprising: one or more memories and one or more processors functionally connected to the one or more memories,
wherein based on the one or more memories being executed by the one or more processors, the one or more processors store instructions configured to perform all steps of a method of any one of claims 1 to 10.

13. One or more non-transitory computer-readable media storing instructions, wherein the instructions executable by one or more processors configure the one or more processor to perform all steps of a method of any one of claims 1 to 10.

14. A method performed by a base station in a wireless communication system, the method comprising:
transmitting configuration information,
wherein the configuration information includes information for a plurality of reference signals (RSs) which are for a beam indication, and a plurality of RS sets are configured based on the plurality of RSs;
transmitting the beam indication; and
transmitting a physical signal/channel based on the beam indication,
wherein the beam indication is performed based on one of the plurality of RS sets.

15. A base station operating in a wireless communication system, the base station comprising:
one or more transceivers,
one or more processors; and
one or more memories connected to the one or more processors and storing instructions,
wherein based on the instructions being executed by the one or more processors, the one or more processors are configured to perform all steps of a method of claim 14.
